# EUROPÄISCHE PATENTANMELDUNG

(11) **EP 4 745 098 A1**
(43) Veröffentlichungstag der Anmeldung: **20.05.2026**
(21) Anmeldenummer: 25209118.6
(22) Anmeldetag: 16.10.2025
(51) Int. Cl.: C03B 9/447

(54) **GREIFERVORRICHTUNG FÜR EINE GLASFORMMASCHINE**

(30) Priorität: 17.10.2024 DE 202024105974 U
(71) Anmelder: T&T Turnov s.r.o., 51101 Turnov (CZ)
(72) Erfinder: Themann, Rolf, 51101 Turnov (CZ); Nejedlo, Jakub, 46344 Sychrov (CZ)
(74) Vertreter: Moser Götze & Partner Patentanwälte mbB

(57) **Zusammenfassung**

Um eine Greifervorrichtung (1) für eine Glasformmaschine, insbesondere für eine IS- oder eine ISX-Glasformmaschine, mittels der Glasartikel an einer Fertigformseite einer Station der Glasformmaschine ergreifbar und von der Fertigformseite der Station zu einer Abstellplatte der Glasformmaschine transportierbar und auf der Abstellplatte abstellbar sind, so zu gestalten, dass zu ersetzende oder auszutauschende Stationen der Glasformmaschine leichter in die Glasformmaschine eingefügt und aus der Glasformmaschine entnommen werden können, wird vorgeschlagen, dass die Greifervorrichtung (1) oberhalb der Station der Glasformmaschine an einem Querträger (3) der Glasformmaschine gehaltert und befestigt ist.

## Beschreibung

Die Erfindung bezieht sich auf eine Greifervorrichtung für eine Glasformmaschine, insbesondere für eine IS- oder eine ISX-Glasformmaschine, mittels der Glasartikel an einer Fertigformseite einer Station der Glasformmaschine ergreifbar und von der Fertigformseite der Station zu einer Abstellplatte der Glasformmaschine transportierbar und auf der Abstellplatte abstellbar sind.

Bei bekannten Glasformmaschinen sind derartige Greifervorrichtungen fest an der Station der Glasformmaschine verbaut und integriert. Zum Einbau dient häufig eine sog. Stationssäule, an der die Greifervorrichtung z. B. mittels Verschraubungen angebracht ist. Bei einer Änderung des mit der Glasformmaschine hergestellten Glasartikels muss die Höheneinstellung der Greifervorrichtung dann aufwendig verändert werden. Des Weiteren ist es mit einem erheblichen technischen Aufwand einhergehend, wenn eine Station der Glasformmaschine z. B. aufgrund eines technischen Defekts ausgetauscht bzw. ersetzt werden muss.

Ausgehend von dem vorstehend geschilderten Stand der Technik liegt der Erfindung die Aufgabe zugrunde, eine Greifervorrichtung für eine Glasformmaschine zur Verfügung zu stellen, mittels der sichergestellt werden kann, dass zu ersetzende oder auszutauschende Stationen der Glasformmaschine leichter in die Glasformmaschine eingefügt und aus der Glasformmaschine entnommen werden können.

Diese Aufgabe wird erfindungsgemäß dadurch gelöst, dass die Greifervorrichtung oberhalb der Station der Glasformmaschine an einem Querträger der Glasformmaschine gehaltert und befestigt ist. Hierdurch ist zum einen sichergestellt, dass die Greifervorrichtung bei der Entnahme der Station an der Glasformmaschine verbleibt, ohne dass diesbezüglich aufwändige Montage- oder Umbauarbeiten erforderlich wären, zum anderen wird erreicht, dass die bei einem Defekt oder aus anderen Gründen aus der Glasformmaschine zu entnehmende Station leichter handhabbar ist.

Der Bewegungsablauf der Greifervorrichtung, mittels dem von ihr ergriffene Glasartikel von der Fertigformseite der Station zur Abstell- oder Kühlplatte der Glasformmaschine transportiert werden, lässt sich vorteilhaft realisieren, wenn die Greifervorrichtung ein Triebgestänge aufweist, wobei zwei Treibstangen des Triebgestänges mit einem Ende an einer am Querträger der Glasformmaschine angebrachten Konsole der Greifervorrichtung schwenkbar gelagert sind.

Zweckmäßigerweise sind die beiden Treibstangen des Triebgestänges der erfindungsgemäßen Greifervorrichtung an ihren anderen, konsolenfernen Enden gelenkig mit den einen Enden zweier Gelenkstangen des Triebgestänges verbunden, die an ihren anderen Enden gelenkig miteinander verbunden sind. Die Treib- und die Gelenkstangen des Triebgestänges sind entsprechend in einer durch das Triebgestänge aufgespannten Ebene quasi beliebig zueinander verstell- und einstellbar.

Wenn an einem Schwenkverbindungsgelenk, mittels dem die beiden treibstangenfernen Enden der Gelenkstangen zueinander verschwenkbar miteinander verbunden sind, ein Greiferkopf der Greifervorrichtung gehaltert ist, kann dieser Greiferkopf mittels des Triebgestänges auf quasi beliebigen durch das Triebgestänge realisierbaren Bewegungsbahnen in der durch das Triebgestänge aufgespannten Ebene zwischen der Fertigformseite der Station und der Abstell- bzw. Kühlplatte der Glasformmaschine bewegt werden.

Um zu gewährleisten, dass der Greiferkopf mit seiner Längsachse stets in der Waagerechten positioniert ist, ist es vorteilhaft, wenn an einem Schwenkverbindungsgelenk, mittels dem das andere, konsolenferne Ende der einen Treibstange des Triebgestänges verschwenkbar mit dem einen Ende der Gelenkstange des Triebgestänges verbunden ist, ein Lagerteil angelenkt ist, an dem eine erste Parallelogrammstange an einem Ende angelenkt ist, die mit ihrem anderen Ende an der Konsole angelenkt ist, und an dem eine zweite Parallelogrammstange an einem Ende angelenkt ist, die mit ihrem anderen Ende am Greiferkopf angelenkt ist.

Wenn die erfindungsgemäße Greifervorrichtung in einer vorteilhaften Ausführungsform zwei separate, unabhängig voneinander steuer- und regelbare Servomotoren aufweist, sind die von der Greifervorrichtung ergriffenen Glasartikel innerhalb eines vorgebbaren Feldes, das die Fertigformseite der Station und die Abstellplatte der Glasformmaschine abdeckt, auf beliebigen Bewegungsbahnen mit in einem sinnvollen Bereich beliebigen Geschwindigkeiten und Beschleunigungen transportierbar. Im Vergleich zu aus dem Stand der Technik bekannten Greifervorrichtungen, die üblicherweise lediglich einen Antriebs- bzw. Servomotor aufweisen und von daher den Greiferkopf stets auf einem Bogen von 180° von der Fertigformseite der Station zur Abstell- bzw. Kühlplatte der Glasformmaschine verfahren und bei denen entsprechend der Greiferkopf nach einer kurzen Verweilzeit an der Abstell- bzw. Kühlplatte, deren Dauer von einer Steuervorrichtung der Glasformmaschine einstellbar ist, wieder auf einem Bogen von 180° zur Abholung der nächsten Glasartikel zurück zur Fertigformseite der Station verfahren wird, wobei die Zurückbewegung des Greiferkopfs nach einem Teilbogen von ca. 45° oberhalb der Abstell- bzw. Kühlplatte unterbrochen und dann entlang dem verbleibenden Teilbogen von ca. 135° fortgesetzt werden kann, kann im Falle der erfindungsgemäßen, mit zwei Servomotoren ausgerüsteten Greifervorrichtung, die gleichzeitig im Einsatz sein können, der Greiferkopf nicht nur in einer Bewegung auf einem Bogen von 180° verfahren werden, sondern kann innerhalb eines gedanklich vorgegebenen rechteckigen Bereichs quasi durch und zu beliebig vorgebbaren Punkten verfahren werden. Die Vorgaben für die Bewegungsbahnen des Greiferkopfs, denen entsprechen die beiden Servomotoren anzusteuern sind, erfolgt - wie die Ansteuerung der beiden Servomotoren - durch die Steuervorrichtung der Glasformmaschine.

In technisch-konstruktiv wenig aufwändiger Weise lässt sich die vorstehend geschilderte vorteilhafte Ausführungsform der erfindungsgemäßen Greifervorrichtung realisieren, wenn die Servomotoren der Greifervorrichtung, die an der Konsole gehaltert sind, die Verschwenkung der einen Treibstange um deren Schwenklager an der Konsole bzw. die Verschwenkung der anderen Treibstange um deren Schwenklager an der Konsole unabhängig voneinander steuern und regeln.

Wenn die Konsole in Horizontal- und in Vertikalrichtung ein- bzw. verstellbar am Querträger der Glasformmaschine halterbar ist, kann für unterschiedliche Glasartikel, die in aufeinanderfolgenden Produktionszyklen an der Glasformmaschine hergestellt werden, gewährleistet werden, dass die jeweiligen Glasartikel vom Greiferkopf der Greifervorrichtung positionsgenau ergriffen werden.

Eine weitere vorteilhafte Weiterbildung der erfindungsgemäßen Greifervorrichtung ergibt sich, wenn deren für bestimmte an der Glasformmaschine hergestellte Glasartikel als optimal ermittelten Bewegungsabläufe erfassbar und in einer Steuervorrichtung der Glasformmaschine programmier- und abspeicherbar sind.

Wenn der Greiferkopf der Greifervorrichtung austauschbar an einer am Schwenkverbindungsgelenk zwischen den beiden Gelenkstangen des Triebgestänges gehalterten Greiferkopfaufnahme aufgenommen ist, kann mit geringem Aufwand der Greiferkopf ausgetauscht werden, wodurch die Greifervorrichtung an unterschiedliche Formenanzahlen an der Fertigformseite der Station der Glasformmaschine anpassbar ist.

Sofern die erfindungsgemäße Greifervorrichtung an ihrem Greiferkopf mit einem Blaskopf ausgerüstet ist, können die vom Greiferkopf an der Fertigformseite der Station ergriffenen Glasartikel beim Transport zur Abstell- bzw. Kühlplatte der Glasformmaschine weiter gekühlt werden, wodurch sich bei der Herstellung der Glasartikel eine weitere Zeiteinsparung ergibt.

Wenn der Blaskopf der Greifervorrichtung einen Kühlluftanschluss für eine Mündungskühlung der vom Greiferkopf der Greifervorrichtung ergriffenen und transportierten Glasartikel und einen Blasluftanschluss zum Fertigblasen dieser ergriffenen und transportierten Glasartikel aufweist, kann die Transportzeit zur Abstell- bzw. Kühlplatte der Glasformmaschine optimal zur Weiterbehandlung der Glasartikel genutzt werden.

Der Austausch einer Station der Glasformmaschine ist noch einfacher realisierbar, wenn zwischen der Greifervorrichtung und der ihr zugeordneten Station der Glasformmaschine keinerlei mechanische Verbindungen, Leitungsverbindungen oder dgl. vorhanden sind.

Eine noch größere Anpassbarkeit der erfindungsgemäßen Greifervorrichtung an unterschiedliche, in aufeinanderfolgenden Produktionszyklen an der Glasmaschine herzustellende Glasartikel wird erreicht, wenn der Greiferkopf horizontal, vorzugsweise in Querrichtung der Greiferkopfaufnahme, verstellbar und in beliebigen Einstellungen arretierbar ist.

Im Folgenden wird die Erfindung anhand einer Ausführungsform unter Bezugnahme auf die Zeichnung näher erläutert. Es zeigen:
Figur 1 eine perspektivische Darstellung einer Ausführungsform einer in einer Glasformmaschine installierten erfindungsgemäßen Greifervorrichtung;
Figur 2 eine Seitenansicht der in Figur 1 dargestellten Ausführungsform der erfindungsgemäßen Greifervorrichtung;
Figur 3 eine Vorderansicht der in den Figuren 1 und 2 dargestellten Ausführungsform der erfindungsgemäßen Greifervorrichtung;
Figur 4 eine perspektivische Darstellung einer weiteren Ausführungsform der in einer Glasmaschine installierten erfindungsgemäßen Greifervorrichtung;
Figur 5 eine Seitenansicht der in Figur 4 dargestellten weiteren Ausführungsform der erfindungsgemäßen Greifervorrichtung; und
Figur 6 eine Vorderansicht der in den Figuren 4 und 5 dargestellten weiteren Ausführungsform der erfindungsgemäßen Greifervorrichtung.

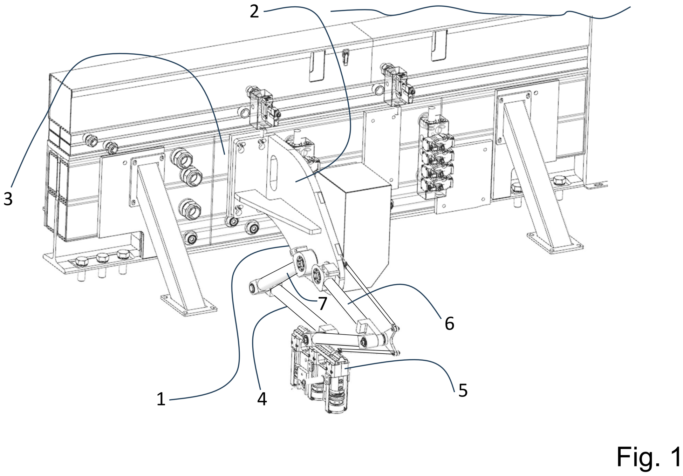

Eine erfindungsgemäße Greifervorrichtung 1 kommt in einer Glasformmaschine, insbesondere in einer IS- oder einer ISX-Glasformmaschine zum Einsatz. Die entsprechende Glasformmaschine ist in Figur 1 lediglich hinsichtlich ihrer für die vorliegende Erfindung wesentlichen Teile dargestellt. Mittels einer derartigen Glasformmaschine sind unterschiedliche Glasartikel herstellbar.

Die Greifervorrichtung 1 ist, wie sich aus Figur 1 ergibt, oberhalb einer Station oder Sektion der Glasformmaschine angeordnet. Mittels der Greifervorrichtung 1 können an einer Fertigformseite der Station bearbeitete Glasartikel an ihren Mündungsbereichen von der Greifervorrichtung 1 ergriffen und dann von der Fertigformseite der Station zu einer Abstell- oder auch Kühlplatte der Glasformmaschine transportiert und dort abgestellt werden.

Zu der Greifervorrichtung 1 gehört eine Konsole 2, die oberhalb der in Figur 1 nicht dargestellten Station der Glasformmaschine an einem Querträger 3 der Glasformmaschine gehaltert ist. Bei der Anbringung der Konsole 2 am Querträger 3 kann die Konsole 2 sowohl in Horizontal- als auch in Vertikalrichtung exakt in Bezug auf den Querträger 3 und damit die Station der Glasformmaschine positioniert werden, so dass mittels der Greifervorrichtung 1 an der Fertigformseite der Station befindliche Glasartikel positionsgenau ergriffen werden können. Bei einem entsprechenden Anforderungsprofil kann auch eine in Vertikal- und Horizontalrichtung verstell- bzw. einstellbare Anbringung der Konsole 2 am glasformmaschinenseitigen Querträger 3 realisiert werden.

An der Konsole 2 ist ein Triebgestänge 4 angebracht, mittels dem die Bewegung eines am Triebgestänge 4 gehalterten Greiferkopfs 5 der Greifervorrichtung 1 von der Fertigformseite der Station der Glasformmaschine mit den am Greiferkopf 5 ergriffenen Glasartikeln zur Abstell- bzw. Kühlplatte und von der Abstell- bzw. Kühlplatte ohne Glasartikel zurück zur Fertigformseite der Station durchgeführt wird.

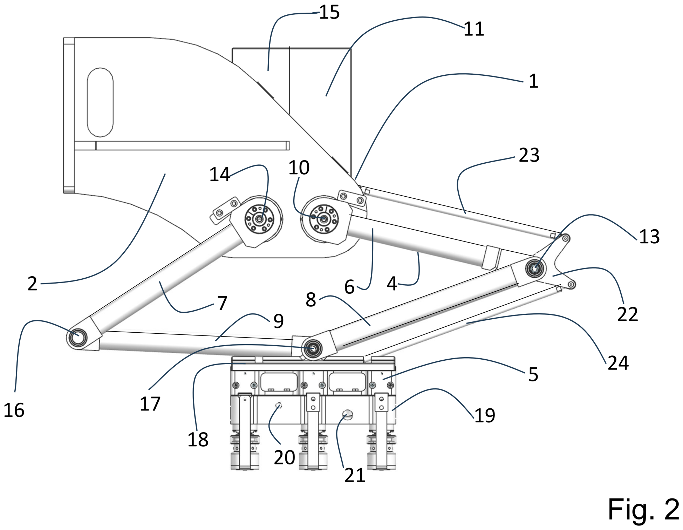

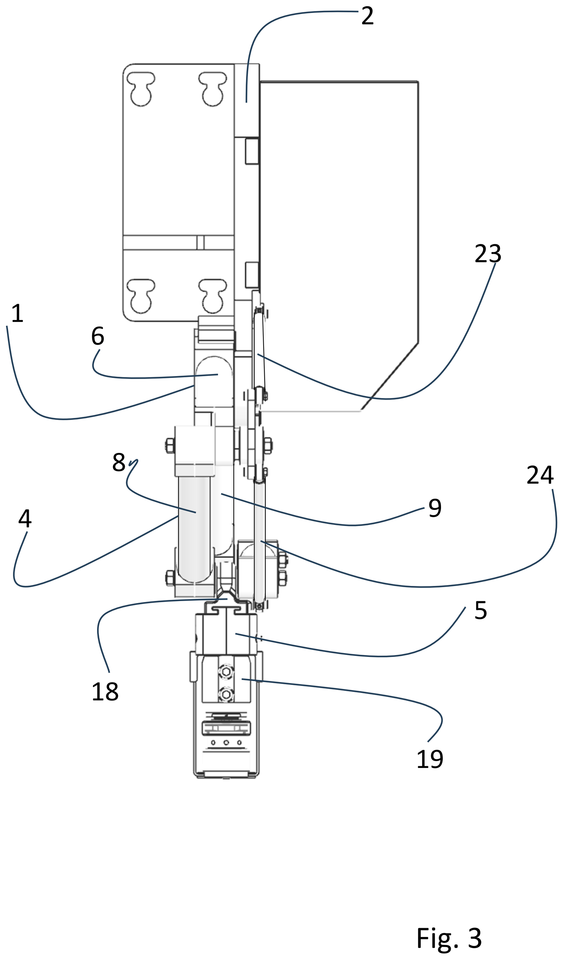

Zu dem Triebgestänge 4 gehören bei der in den Figuren 1 bis 3 dargestellten Ausführungsform eine erste Treibstange 6, eine zweite Treibstange 7, eine erste Gelenkstange 8 und eine zweite Gelenkstange 9.

Die erste Treibstange 6 ist mittels eines ersten Schwenklagers 10 verschwenkbar an der Konsole 2 gelagert. Zur Durchführung einer Schwenkbewegung steht die erste Treibstange 6 an ihrem konsolenseitigen Ende in Antriebsverbindung mit einem ersten Servomotor 11, der an der Konsole 2 gehaltert ist und mittels dem über sein Getriebe die erste Treibstange 6 um ihr bzw. das erste Schwenklager 10 herum schwenkbar ist. Mittels des ersten Servomotors 11 ist die erste Treibstange 6 in beiden Dreh- bzw. Schwenkrichtungen und mit beliebigen Geschwindigkeiten und Beschleunigungen bewegbar. An ihrem konsolenfernen Ende ist die erste Treibstange 6 mittels eines ersten Schwenkverbindungsgelenks 13 gelenkig mit dem einen Ende der ersten Gelenkstange 8 verbunden.

Die zweite Treibstange 7 ist mittels eines zweiten Schwenklagers 14, das an der Konsole 2 in Richtung zum Querträger 3 der Glasformmaschine versetzt neben dem ersten Schwenklager 10 angeordnet ist, verschwenkbar an der Konsole 2 gelagert. Zur Durchführung einer Schwenkbewegung steht die zweite Treibstange 7 an ihrem konsolenseitigen Ende in Antriebsverbindung mit einem zweiten Servomotor 15, der an der Konsole 2 gehaltert ist und mittels dem über sein Getriebe die zweite Treibstange 7 um ihr bzw. das zweite Schwenklager 14 herum schwenkbar ist. Mittels des zweiten Servomotors 15 ist die zweite Treibstange 7 in beiden Dreh- bzw. Schwenkrichtungen und mit beliebigen Geschwindigkeiten und Beschleunigungen bewegbar. Der zweite Servomotor 15 ist separat und völlig unabhängig vom ersten Servomotor 11 betreib-, steuer- und regelbar. An ihrem konsolenfernen Ende ist die zweite Treibstange 7 mittels eines zweiten Schwenkverbindungsgelenks 16 gelenkig mit dem einen Ende der zweiten Gelenkstange 9 verbunden.

Die erste Gelenkstange 8 und die zweite Gelenkstange 9 des Triebgestänges 4 sind an ihren treibstangenfernen und einander zugewandten Enden mittels eines dritten Schwenkverbindungsgelenks 17 gelenkig miteinander verbunden.

An dem die beiden Gelenkstangen 8, 9 miteinander verbindenden dritten Schwenkverbindungsgelenk 17 ist der Greiferkopf 5 der Greifervorrichtung 1 gehaltert. Hierzu ist am dritten Schwenkverbindungsgelenk 17 eine Greiferkopfaufnahme 18 angebracht, in die der Greiferkopf 5 einbringbar ist. Der Greiferkopf 5 ist ohne großen Aufwand mit der Greiferkopfaufnahme 18 in und außer Eingriff bringbar, so dass je nach Anforderungsprofil unterschiedliche Greiferköpfe 5 mit unterschiedlichen Greiferanzahlen an der Greiferkopfaufnahme 18 installiert werden können.

Die Anbringung des Greiferkopfs 5 an der Greiferkopfaufnahme 18 kann mit geringem technisch-konstruktiven Aufwand so gestaltet sein, dass der Greiferkopf 5, vorzugsweise in Querrichtung der Greiferkopfaufnahme 18, horizontal verstellbar bzw. verschieblich an der Greiferkopfaufnahme 18 gehaltert und in beliebigen Positionen an der Greiferkopfaufnahme 18 arretierbar ist.

Bei der in den Figuren 1 bis 3 gezeigten Ausführungsform der Greifervorrichtung 1 ist am Greiferkopf 5 ein Blaskopf 19 fest angebracht. Mittels dieses Blaskopfs 19 können in den Greifern des Greiferkopfs 5 gehaltene Glasartikel mit dem Ergreifen derselben auf der Fertigformseite der Station und beim Transport zur Aufnahme- bzw. Kühlplatte der Glasformmaschine an ihren Mündungsbereichen gekühlt und fertiggeblasen werden. Hierzu hat der Blaskopf 19 eine Mündungskühlung und einem Kühlluftanschluss 20 und ein Fertigblasteil mit einem Blasluftanschluss 21. Durch die zusätzliche Kühlung und das zusätzliche Fertigblasen während des Transportvorgangs ergibt sich bei der Herstellung der Glasartikel eine zusätzliche Zeitersparnis.

Am zwischen der ersten Treibstange 6 und der ersten Gelenkstange 8 angeordneten ersten Schwenkverbindungselement 13 des Triebgestänges 4 ist ein Lagerteil 22 angelenkt. An diesem Lagerteil 22 ist ein Ende einer ersten Parallelogrammstange 23 angelenkt, die etwa parallel zur ersten Treibstange 6 oberhalb derselben verläuft und die an ihrem anderen Ende an der Konsole 2 der Greifervorrichtung 1 angelenkt ist. Des Weiteren ist an diesem Lagerteil 22 ein Ende einer zweiten Parallelogrammstange 24 angelenkt, die etwa parallel zur ersten Gelenkstange 8 unterhalb derselben verläuft und die an ihrem anderen Ende an der Greiferaufnahme 18 angelenkt ist. Durch diese beiden Parallelogrammstangen 23, 24 wird sichergestellt, dass die Greiferkopfaufnahme 18 und damit der Greiferkopf 5 immer in der Waagerechten gehalten werden.

Aufgrund der beiden unabhängig voneinander arbeitenden Servomotoren 11, 15, die die Treibstangen 6, 7 des Treibgestänges 4 unabhängig voneinander verschwenken können, kann der Greiferkopf 5 der Greifervorrichtung 1 in einem rechteckigen Feld, das die Fertigformseite der Station und die Abstell- bzw. Kühlfläche der Glasformmaschine abdeckt, jeden beliebigen Punkt anfahren. Die Steuerung der Servomotoren 11, 15 erfolgt mittels der Steuervorrichtung der Glasformmaschine. In dieser Steuervorrichtung sind je nach zu fertigendem Glasartikel Steuerprogramme für die beiden Servomotoren 11, 15 und damit Bewegungsablaufprogramme für das Triebgestänge 4 programmier- und abspeicherbar. Für jeden Glasartikel kann ein optimales Bewegungsablaufprogramm definiert und abgespeichert werden. Bei erneuter Produktion dieses Glasartikels können bei früheren Produktionszyklen gewonnene Erfahrungen und Einstellungswerte berücksichtigt werden, wodurch dieser Glasartikel dann besser und schneller produziert werden kann. Des Weiteren kann dank der zwei unabhängig voneinander angetriebenen Servomotoren 11, 15 die Rückfahrkurve des Greiferkopfs 5, die dieser bei seinem Weg von der Abstell- bzw. Kühlplatte der Glasformmaschine zur Fertigformseite der Station durchläuft, erheblich verkürzt werden. Entsprechend können bis zu 30% kürzere Wege gefahren werden, wodurch - je nach Produktionsgeschwindigkeit und nach Glasartikel - die Produktion je Tag um 2 bis 3% erhöht werden kann.

Da die vorstehend beschriebene Greifervorrichtung 1 insgesamt oberhalb der Station am Querträger 3 der Glasformmaschine angebracht ist und da keinerlei mechanische oder Leitungsverbindungen zwischen der Greifervorrichtung einerseits und der Station andererseits vorliegen, kann die Station der Glasformmaschine bei einem Defekt mit einem geringen Zeitaufwand gewechselt werden.

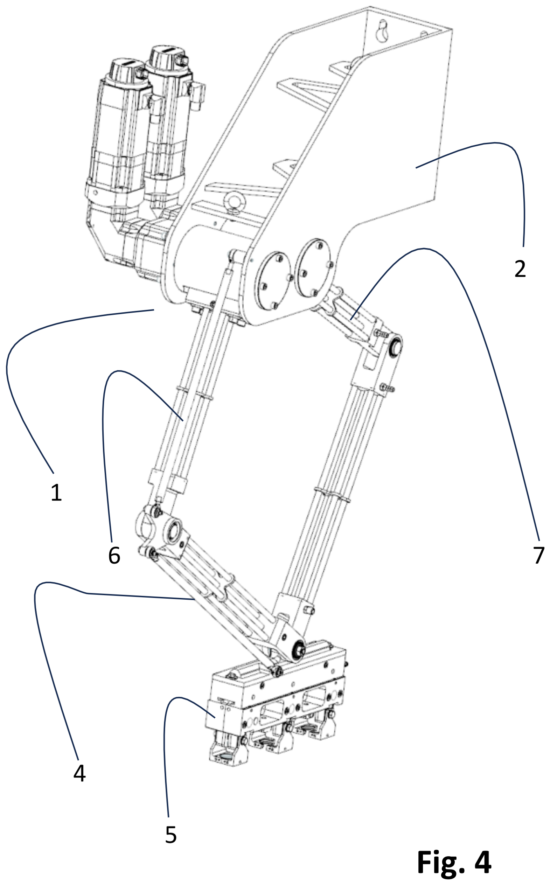

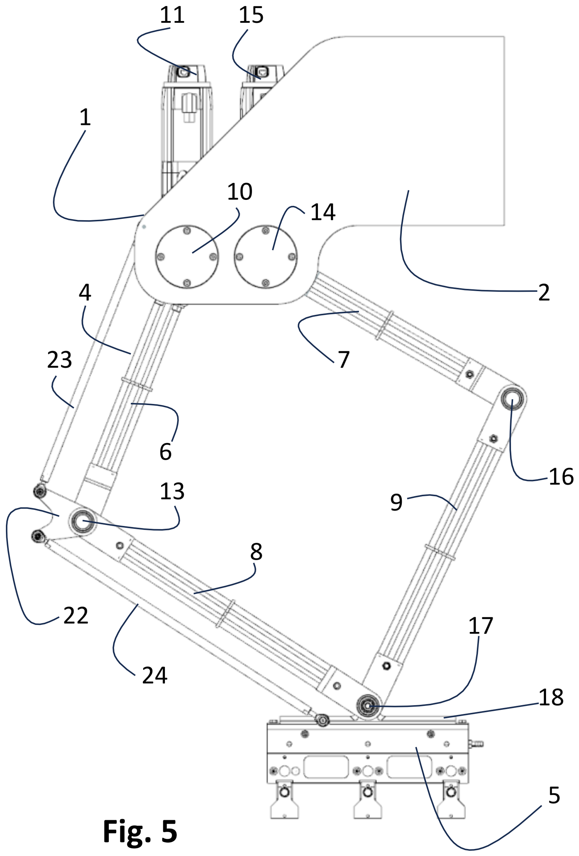

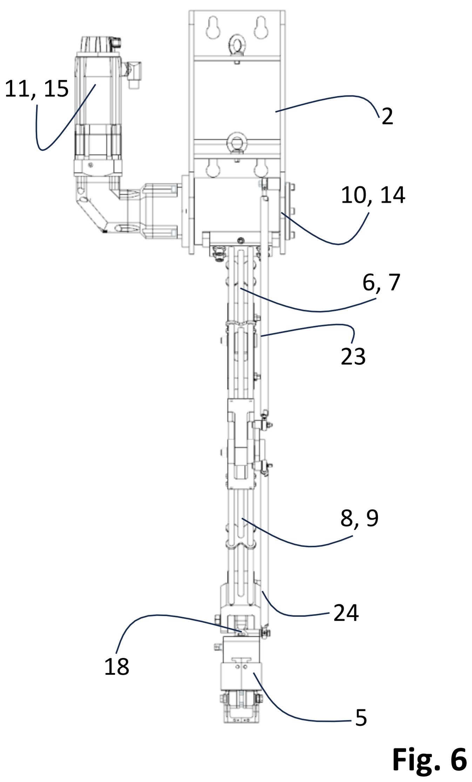

In den Figuren 4 bis 6 ist eine weitere Ausführungsform der erfindungsgemäßen Greifervorrichtung 1 gezeigt, die sich von der anhand der Figuren 1 bis 3 vorstehend eingehend beschriebenen Ausführungsform im wesentlichen lediglich dadurch unterscheidet, dass am Greiferkopf 5 kein Blaskopf vorgesehen ist.

## Patentansprüche

1. Greifervorrichtung für eine Glasformmaschine, insbesondere für eine IS- oder eine ISX-Glasformmaschine, mittels der Glasartikel an einer Fertigformseite einer Station der Glasformmaschine ergreifbar und von der Fertigformseite der Station zu einer Abstellplatte der Glasformmaschine transportierbar und auf der Abstellplatte abstellbar sind, **dadurch gekennzeichnet, dass** die Greifervorrichtung (1) oberhalb der Station der Glasformmaschine an einem Querträger (3) der Glasformmaschine gehaltert und befestigt ist.

2. Greifervorrichtung nach Anspruch 1, mit einem Triebgestänge (4), wobei zwei Treibstangen (6, 7) des Triebgestänges (4) mit einem Ende an einer am Querträger (3) der Glasformmaschine angebrachten Konsole (2) der Greifervorrichtung (1) schwenkbar gelagert sind.

3. Greifervorrichtung nach Anspruch 2, bei der die beiden Treibstangen (6, 7) des Triebgestänges (4) an ihren anderen Enden gelenkig mit den einen Enden zweier Gelenkstangen (8, 9) des Triebgestänges (4) verbunden sind, die an ihren anderen Enden gelenkig miteinander verbunden sind.

4. Greifervorrichtung nach Anspruch 3, bei der an einem Schwenkverbindungsgelenk (17), mittels dem die beiden anderen Enden der Gelenkstangen (8, 9) des Triebgestänges (4) zueinander verschwenkbar miteinander verbunden sind, ein Greiferkopf (5) der Greifervorrichtung (1) gehaltert ist.

5. Greifervorrichtung nach Anspruch 4, bei der an einem Schwenkverbindungsgelenk (13), mittels dem das andere Ende der Treibstange (6) des Triebgestänges (4) verschwenkbar mit dem einen Ende der Gelenkstange (8) des Triebgestänges (4) verbunden ist, ein Lagerteil (22) angelenkt ist, an dem eine erste Parallelogrammstange (23) an einem Ende angelenkt ist, die mit ihrem anderen Ende an der Konsole (2) angelenkt ist, und an dem eine zweite Parallelogrammstange (24) an einem Ende angelenkt ist, die mit ihrem anderen Ende am Greiferkopf (5) angelenkt ist.

6. Greifervorrichtung nach einem der Ansprüche 1 bis 5, die zwei separate, unabhängig voneinander steuer- und regelbare Servomotoren (11, 15) aufweist, so dass die von der Greifervorrichtung (1) ergriffenen Glasartikel innerhalb eines vorgebbaren Feldes, das die Fertigformseite der Station und die Abstellplatte der Glasformmaschine abdeckt, auf beliebigen Bewegungsbahnen transportierbar sind.

7. Greifervorrichtung nach Anspruch 6, mittels deren Servomotoren (11, 15), die an der Konsole (2) gehaltert sind, die Verschwenkung der Treibstange (6) um ihr Schwenklager (10) an der Konsole (2) bzw. die Verschwenkung der Treibstange (7) um ihr Schwenklager (14) an der Konsole (2) unabhängig voneinander steuer- und regelbar sind.

8. Greifervorrichtung nach einem der Ansprüche 2 bis 7, deren Konsole (2) in Horizontal- und in Vertikalrichtung ein- bzw. verstellbar am Querträger (3) der Glasformmaschine halterbar ist.

9. Greifervorrichtung nach einem der Ansprüche 1 bis 8, deren für bestimmte an der Glasformmaschine hergestellte Glasartikel als optimal ermittelte Bewegungsabläufe erfassbar, und in einer Steuervorrichtung der Glasformmaschine programmier- und abspeicherbar sind.

10. Greifervorrichtung nach einem der Ansprüche 4 bis 9, deren Greiferkopf (5) austauschbar an einer am Schwenkverbindungsgelenk (17) gehalterten Greiferkopfaufnahme (18) aufgenommen ist.

11. Greifervorrichtung nach einem der Ansprüche 4 bis 10, an deren Greiferkopf (5) ein Blaskopf (19) angeordnet ist.

12. Greifervorrichtung nach Anspruch 11, deren Blaskopf (19) einen Kühlluftanschluss (20) für eine Mündungskühlung der vom Greiferkopf (5) der Greifervorrichtung (1) ergriffenen und transportierten Glasartikel und einen Blasluftanschluss (21) zum Fertigblasen der vom Greiferkopf (5) der Greifervorrichtung (1) ergriffenen und transportierten Glasartikel aufweist.

13. Greifervorrichtung nach einem der Ansprüche 1 bis 12, zwischen der und der ihr zugeordneten Station der Glasformmaschine keinerlei mechanische Verbindungen, Leitungsverbindungen oder dgl. vorhanden sind.

14. Greifervorrichtung nach einem der Ansprüche 4 bis 13, deren Greiferkopf (5) horizontal, vorzugsweise in Querrichtung der Greiferkopfaufnahme (18), verstellbar und in beliebigen Einstellungen arretierbar ist.
